# EUROPÄISCHE PATENTSCHRIFT

(11) **EP 1 966 454 B1**
(45) Veröffentlichungstag und Bekanntmachung des Hinweises auf die Patenterteilung: **09.01.2013**
(21) Anmeldenummer: 06840981.2
(22) Anmeldetag: 14.12.2006
(51) Int. Cl.: E05B 19/26, E05B 19/04, G07C 9/00, B29C 45/14

(54) **ELEKTRONISCHER SCHLÜSSEL FÜR FAHRZEUGE**
ELECTRONIC KEY FOR VEHICLES
CLE ELECTRONIQUE POUR VEHICULES

(30) Priorität: 23.12.2005 DE 102005062637
(43) Veröffentlichungstag der Anmeldung: 10.09.2008
(73) Patentinhaber: Huf Hülsbeck & Fürst GmbH & Co. KG, 42551 Velbert (DE)
(72) Erfinder: KLEIN, Helmut, 42549 Velbert (DE); WITTWER, Dirk, 42579 Heiligenhaus (DE)
(86) Internationale Anmeldenummer: PCT/EP2006/012032
(87) Internationale Veröffentlichungsnummer: WO 2007/079896

(56) Entgegenhaltungen:
- EP-A- 1 465 118
- EP-A1- 0 648 589
- EP-A1- 0 844 347
- DE-A1- 19 512 303
- DE-A1- 19 802 300
- DE-C1- 19 952 247
- US-A- 5 409 648
- US-B1- 6 786 332

## Beschreibung

Die vorliegende Erfindung betrifft einen elektronischen Schlüssel für Fahrzeuge, bestehend aus einem Gehäuse, das einen Energiespeicher, mindestens eine Sende- und/oder Empfangseinrichtung und einen elektronischen Speicher für einen Identifikationscode aufnimmt. Die Erfindung betrifft auch ein Herstellverfahren für einen solchen elektronischen Schlüssel.

Bekannte elektronische Schlüssel weisen einen Elektronikteil auf, der von einem Energiespeicher, wie einer Batterie oder einem Akku, gespeist wird. Zusätzlich weist ein solcher elektronischer Schlüssel zur Kommunikation mit dem Steuergerät des Fahrzeuges eine Sende- und/oder Empfangseinrichtung auf. Damit wird ein Code im Rahmen eines Wechselcode-Verfahren zwischen dem elektronischen Schlüssel und dem Fahrzeug ausgetauscht. Nach erfolgter positiver Authentifizierung entriegelt das Steuergerät am Fahrzeug die Schlösser, so dass der Fahrzeugbenutzer die Türen öffnen kann.

Dieser Authentifizierungsvorgang kann entweder per Tastendruck am elektronischen Schlüssel gestartet werden oder wird bei Fahrzeugen mit so genannten "Passiv-Entry"-Funktion vom Fahrzeug ausgelöst, sofern dieses die Annäherung einer Person über Sensoren detektiert.
Dazu trägt der Fahrzeugnutzer entweder einen elektronischen Schlüssel mit Tastatur und ggf. mit integriertem mechanischem Notschlüssel oder eine Smart-Card, einem scheckkartenförmigen relativ dünnen Gehäuse mit integrierter Elektronik, bei sich.
Die empfindliche Elektronik ist in einem relativ harten Kunststoffgehäuse untergebracht, um gegen Feuchtigkeit und mechanischen Einflüssen geschützt zu sein. Nachteilig ist jedoch, dass die Elektronik nicht gegen Erschütterungen geschützt ist, wie sie durch ein am elektronischen Schlüssel befestigten pendelndem Schlüsselbund entstehen oder durch Herabfallen auf den Boden oder auf andere Gegenstände.

Aus der DE 199 62 975 A1 ist ein solcher elektronischer Schlüssel mit integriertem mechanischem Schlüssel bekannt, wobei die Elektronik mit Transponder und Sende- und Empfangseinheiten und Batterie im Gehäuse, untergebracht ist.
Auf der Oberseite befinden sich Tastaturelemente zum Fernauslösen der Entriegelung des Fahrzeuges. Der mechanische Schlüssel wird vor Fahrtantritt in ein Zündschloss gesteckt. Danach kann der Motor gestartet werden.

Aus der DE 10 2004 013 198 A1 ist ein elektronischer Schlüssel in Form einer Scheckkarte bekannt. Das dünne Gehäuse beinhaltet alle elektronischen Bauteile zur Kommunikation mit dem Fahrzeug, Batterie und Transponder, sowie einen eingeschobenen mechanischen Notschlüssel.
Der Transponder stellt eine elektronische Wegfahrsperre dar, wobei dieser in einer bestimmten Position im Fahrzeug vom Steuergerät veranlasst wird einen zusätzlichen Code zu übermitteln. Nach positiver Auswertung dieses Codes kann das Fahrzeug erst gestartet werden.

Der scheckkartenförmige elektronische Schlüssel muss in diesem Fall in eine Aufnahme eingeschoben werden. Dort wird der Transpondercode ausgelesen.

Nach dem Abstellen des Fahrzeuges kann der kartenförmige Schlüssel wieder entnommen werden. Da die Gehäuse der elektronischen Schlüssel aus einem relativ harten und glatten Kunststoffmaterial bestehen, lässt sich die Karte schwer greifen.

Des Weiteren sind Systeme bekannt, wo der elektronische Schlüssel zum Fahrtantritt nicht mehr in einen Schacht oder ähnlichem eingesteckt werden müssen. Solche System sind der EP 794 095 B1 und der DE 10 2004 024353 A1 zu entnehmen.

Dabei ist zum Starten des Fahrzeuges der elektronische Schlüssel an einer definierten Stelle abzulegen, wo der Transponder, von einer Spule aktiviert, seinen Code absenden kann. Diese definierte Stelle kann gemäß der EP 794095B1 eine Stelle in der Mittelkonsole oder am Armaturenbrett oder gemäß der DE 10 2004 024 353 A1 im Handschuhfach oder einem ähnlichen Fach am Armaturenbrett sein.
Nachteilig bei diesen Ausführungen ist, dass die Karte während des Fahrbetriebs, wenn keine spezielle Halterung vorgesehen ist, durch wirkende Kräfte wegrutscht bzw. sich bewegen kann. Dies führt ggf. zu unerwünschten Klappergeräuschen oder gar dem Verrutschen in einen Zwischenspalt.
Klappergeräusche entstehen dann insbesondere durch kleine Bewegungen in Verbindung mit einem mit dem elektronischen Schlüssel in Verbindung stehenden Schlüsselbund, d.h. anderen Schlüsseln.

Es ist somit Aufgabe der Erfindung einen elektronischen Schlüssel zu schaffen, der eine definierte Griffigkeit aufweist, der das Verrutschen des Schlüssels auf glatten Oberflächen verhindert.

Diese Aufgabe wird durch die Merkmale des Anspruchs 1 gelöst.

Durch die Beschichtung mit einem reibungserhöhenden Material rutscht eine elektronischer Schlüssel nicht mehr auf einer Fläche auf die er abgelegt wurde weg, insbesondere nicht im Fahrbetrieb, wo Kräfte auf den Schlüssel wirken. Dadurch werden zudem Klappergeräusche vermieden. Elektronische Schlüssel, die aus einer Aufnahme entnommen werden müssen lassen sich leichter greifen, insbesondere wenn die greifende Fläche der Hand durch andere Einflüsse, wie beispielsweise glattflächige Handschuhe, Cremes oder Schweiß, geringe Gegenreibung erzeugt.

Die Unteransprüche 2 bis 14 zeigen vorteilhafte Ausführungsformen und Weiterbildungen auf.

Anspruch 15 zeigt ein Verfahren zur Herstellung eines patentgemäßen elektronischen Schlüssels.

In den Zeichnungen ist die Erfindung in einem Ausführungsbeispiel ausgeführt:

Es zeigen:
- Fig. 1 :: Eine perspektivische Ansicht eines elektronischen Schlüssels auf die Oberseite
- Fig. 2:: Eine perspektivische Ansicht eines elektronischen Schlüssels auf die Unterseite

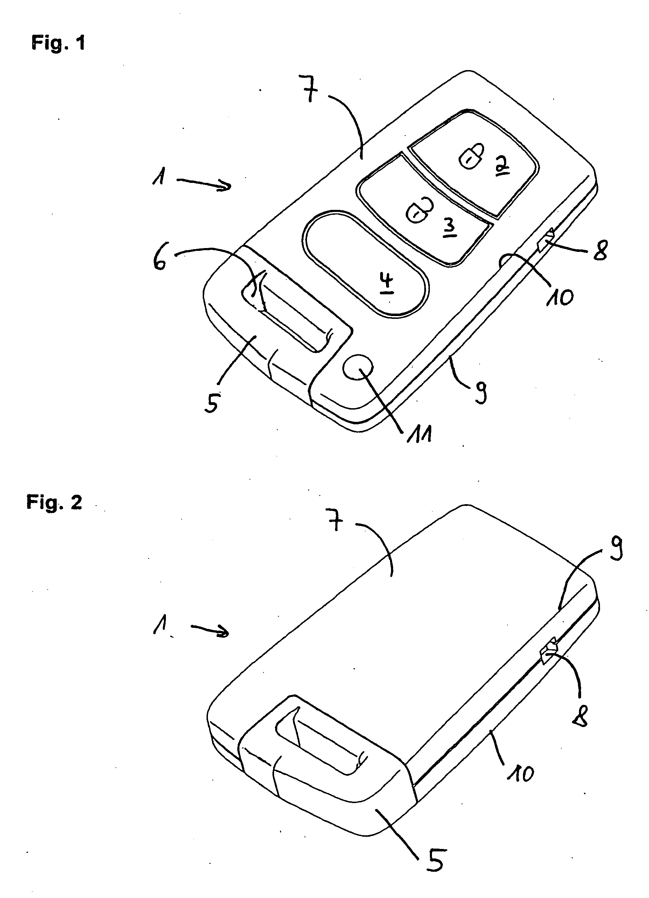

Figur 1 zeigt einen elektronischen Schlüssel 1, der zwei Gehäusehälften 9,10 aufweist und einen eingeschobenen mechanischen Notschlüssel dessen Griffteil 5 sich in das Gehäuse 9,10 einfügt. Der Griffteil 5 des Notschlüssels weist eine Ausnehmung 6 zur Befestigung eines Schlüsselrings auf, so dass der elektronische Schlüssel 1 daran separat aufgehängt oder zu einem Schlüsselbund hinzugefügt werden kann.
Mittels eines Betätigungsknopfes 11 kann der im Gehäuse 9, 10 verrastete Notschlüssel aus dem Gehäuse 9, 10 entnommen werden, wobei der Betätigungsknopf 11 eine Sperre öffnet.

Des Weiteren weist eine Gehäusehälfte 10 Aussparungen zur Aufnahme von Tastschaltelementen 2, 3, 4 auf, die flächenbündig, vertieft oder erhaben in der Gehäusehälfte 10 angeordnet sind.
Die erste Taste 2 bewirkt bei Betätigung eine Funkkommunikation mit dem Fahrzeug, bzw. der Steuereinheit des Fahrzeuges, und veranlasst das Verriegeln des Fahrzeuges.
Die zweite Taste 3 bewirkt eine Funkkommunikation mit dem Fahrzeug und bewirkt das Entriegeln des Fahrzeuges.
Die dritte Taste 4 kann anderweitig belegt sein, so zum Beispiel zur Betätigung von Komfortfunktionen, wie Schiebedach öffnen, Fenster zufahren, Licht einschalten am Fahrzeug oder beliebig programmierbar für den Fahrzeughalter.
Die Anordnung oder Belegung der Tastschalter kann variabel gestaltet werden.

Alternativ kann anstatt oder additiv zu den Tasten 2, 3, 4 ein Display angeordnet sein, das ggf. mit Touch-Screen-Funktionen ausgerüstet ist, um gleiche oben genannte Steuerungsvorgänge am Fahrzeug zu realisieren.

Die Gehäusehälften aus relativ festem, bzw. hartem Kunststoff werden im Spritzgießverfahren hergestellt und bestehen üblicherweise aus einem thermoplastischen Kunststoff wie beispielsweise Polyamide (PA6, PA 12 etc.),PC; PBT, ABS oder Materialien mit ähnlichen Eigenschaften, zum Beispiel bezüglich der Festigkeit. Die Kunststoffe für das Gehäuse können mit Glasfasern verstärkt sein. Alternativ könnten die Gehäusehälften aus Metall hergestellt werden.

Die Tastschaltelemente 2, 3, 4 werden vorzugsweise aus Kunststoffen wie ABS, TEEE, EPDM oder Metallen, wie Aluminiumlegierungen hergestellt.

Des weiteren enthält das Gehäuse eine Antenne, einen Transponder als Wegfahrsperre , Sende- und Empfangseinheiten zur Kommunikation mit der Steuereinheit oder anderen Einheiten des Fahrzeuges, eine Steuereinheit mit elektronischem Speicher zur Generierung und/oder Speicherung eines Identifikationscodes, sowie eine Batterie oder einen Akku zur Stromversorgung des elektronischen Schlüssels 1. Das Gehäuse 9, 10 schützt diese empfindlichen elektronischen Bauteile gegen äußere schädliche Einflüsse wie z.B. Schmutz und Feuchtigkeit und mechanische Einflüsse, wozu es eine gewisse Härte aufweist, damit das Gehäuse überhaupt greifbar wird, ohne dass die Elektronik Schaden nimmt.

Der elektronische Schlüssel 1 ist derart gestaltet, dass er in eine Einschubaufnahme im Fahrzeug eingeführt wird und dort bei Betrieb des Fahrzeuges verrastet wird, damit er nicht während der Fahrt entnommen werden kann. Dazu weist der elektronische Schlüssel 1 an seinen Schmalseiten Rastaufnahmen 8 auf, in die in der Einschubvorrichtung Rastelemente eingreifen.

In seiner Funktion wird der elektronische Schlüssel 1 vom Fahrzeugbediener getragen. Durch Betätigung der Taste 3 wird das Fahrzeug nach Austausch mindestens eines Identifikationscodes zwischen dem Steuergerät des Fahrzeuges und dem elektronischen Schlüssel 1 und nach erfolgter positiver Auswertung entriegelt. Danach kann der Fahrzeugnutzer das Fahrzeug öffnen.

Alternativ ist bei einem Keyless-Entry-System keine Bedienung der Tasten erforderlich, da die Abfrage der Zugangsberechtigung, d.h. der Austausch des Identifikationscodes durch einen Näherungssensor, der im Türgriff installiert ist, ausgelöst, indem ein Funksignal an den elektronischen Schlüssel zum Start des Identifikationvorganges generiert wird.

Die Kommunikation zwischen elektronischem Schlüssel und dem Fahrzeug kann per Funk, kapazitiv oder induktiv erfolgen.

Zum Start des Motors wird der elektronische Schlüssel 1 in einen Einschubschacht eingeschoben oder es muss der elektronische Schlüssel an eine bestimmte definierte Stelle im Fahrzeug gelegt werden, wo eine Abfrage des Transpondercodes möglich ist. Dies kann an der Mittelkonsole eine plane Fläche sein.

Die Oberflächen der Gehäuseschalen 9,10 sind mit einem Ledermaterial 7 belegt. Davon ausgenommen sind die Tastaturenbereiche 2, 3, 4 und der Bereich des Notschlüsselgriffes 5.
Alternativ kann das Gehäuse 9,10 nur teilweise an wesentliche Stellen mit Leder belegt sein. So an den Stellen an den der Schlüssel gegriffen wird und/oder den Kantenbereichen, wo der Schlüssel typischerweise anschlägt.

Ledermaterialien können auf das Gehäuse aufklebt sein.

Geringe belegte Flächen reichen aus, um ein Klappern oder Verrutschen des elektronischen Schlüssels auf anderen Flächen, wie z.B. der definierten Ablagefläche an einer Mittelkonsole, zu vermeiden.

In Figur 2 ist der elektronische Schlüssel 1 von der Rückseite dargestellt, an der keine Tastflächen integriert sind. Diese Fläche ist gleichfalls mit Ledermaterial 7 belegt.

Als Alternative zu Leder können. Beläge wie Kunstleder, Gummi, Textilmaterialien, Schaummaterialien, Silikonmaterialien und Softlacke zur Anwendung kommen. Es können auch Mischformen dieser Materialien Anwendung finden.

Bei Passiv-Entry-Systemen kann ganz auf Tastschalter am elektronischen Schlüssel verzichtet werden, da die Vorgänge mittels Sensoren aktiviert werden. Solche elektronischen Schlüssel haben dann ein scheckkartenähnliches Format.

In einer weiteren nicht dargestellten Ausführungsform ist der elektronische Schlüssel 1 mit mehreren verschiedenen reibungserhöhenden Materialien belegt. So ist die Oberseite auf der sich die Tastelemente befinden mit Leder belegt und die Unterseite des Gehäuses mit Softlack beschichtet. Alternative Anordnungen der Beläge sind möglich.

Die reibungserhöhenden Materialien sind in verschiedenen Bereichen der Oberfläche des elektronischen Schlüssel 1 unterschiedlich dick ausgeführt, um ggf. die Wirkung in gefährdeten Zonen zu verstärken, so z.B. an den Kanten.

Ein erfindungsgemäßes Herstellverfahren für einen solchen elektronischen Schlüssel stellt sich so dar, dass die notwendigen Gehäusehälften jeweils in einer Spritzgießform mit dem reibungserhöhenden Material zusammen abgespritzt werden.
Dazu wird ein flächiges Lederelement in die eine Hälfte der Spritzgießform eingelegt, so dass sich diese an die Wandung anlegt. Danach wird die Form geschlossen und einseitig Kunststoff unter Druck und Temperatur eingespritzt. Durch den Druck wird das Leder an die Wandung gepresst und der übrige Raum füllt sich mit dem Kunststoff. Der flüssige Kunststoff verbindet sich mit der zum Werkzeug innen liegenden Oberfläche des Leders, so dass eine einstückige Gehäusehälfte entsteht, die an der Außenfläche nun eine Lederoberfläche aufweist und nach innen die glatte harte Kunststoffoberfläche. Es handelt sich im Ergebnis um ein einstückiges 2 Komponenten-Gehäuse bzw. Gehäusehälfte.

Nach Fertigung der Gehäusehälften werden die Elektronik, Batteriehalter, Batterien und sonstige mechanische Bauteile (Tasten, Notschlüssel) etc.) in eine Gehäusehälfte montiert und mit der anderen Gehäusehälfte verschlossen.

Die Gehäusehälften werden üblicherweise zusammengeklebt oder mittel Ultraschall-Laser- oder Reibscheißverfahren miteinander fest verbunden.

Alternative kann vor dem Abspritzen einer Gehäusehälfte oder eines Gehäuses ein Softlack an die Außenwandung der Spritzgießform, bzw. einer Hälfte der Spritzgießform aufgesprüht werden. Diese bindet sich dann im Spritzgießprozess mit dem eingespritzten Kunststoff.

Ein nicht zur Erfindung gehörendes Herstellverfahren für einen elektronischen Schlüssel stellt sich so dar, dass der Softlack direkt auf das fertig abgespritzte Gehäuse aufgebracht wird.

## Patentansprüche

1. Elektronischer Schlüssel (1) für Fahrzeuge, bestehend aus einem Gehäuse (9, 10), das einen Energiespeicher, mindestens eine Sende- und/oder Empfangseinrichtung und einen elektronischen Speicher für einen Identifikationscode aufnimmt, **dadurch gekennzeichnet, dass** das Gehäuse (9, 10) ganz oder teilweise auf der äußeren Oberfläche mit mindestens einem reibungserhöhenden Material (7) belegt ist.

2. Elektronischer Schlüssel (1) für Fahrzeuge nach Anspruch 1, **dadurch gekennzeichnet, dass** das Material (7) Leder oder Kunstleder ist.

3. Elektronischer Schlüssel (1) für Fahrzeuge nach Anspruch 1 , **dadurch gekennzeichnet, dass** das Material (7) Softlack ist.

4. Elektronischer Schlüssel (1) für Fahrzeuge nach Anspruch 1, **dadurch gekennzeichnet, dass** das Material (7) ein Textilmaterial ist.

5. Elektronischer Schlüssel (1) für Fahrzeuge nach Anspruch 1, **dadurch gekennzeichnet, dass** das Material (7) ein Schaummaterial ist.

6. Elektronischer Schlüssel (1) für Fahrzeuge nach Anspruch 1, **dadurch gekennzeichnet, dass** das Material (7) ein Gummimaterial ist.

7. Elektronischer Schlüssel (1) für Fahrzeuge nach Anspruch 1, **dadurch gekennzeichnet, dass** das Material (7) ein Silikonmaterial ist.

8. Elektronischer Schlüssel (1) für Fahrzeuge nach einem der vorhergehenden Ansprüche, **dadurch gekennzeichnet, dass** das Gehäuse (9, 10) aus Kunststoff besteht.

9. Elektronischer Schlüssel (1) für Fahrzeuge nach Anspruch 8, **dadurch gekennzeichnet, dass** das Kunststoffgehäuse (9, 10) und die aus reibungserhöhenden Material bestehende Schicht (7) einteilig ausgebildet ist.

10. Elektronischer Schlüssel (1) für Fahrzeuge nach einem der Ansprüche von 1 bis 7 , **dadurch gekennzeichnet, dass** das Gehäuse (9, 10) aus Metall besteht.

11. Elektronischer Schlüssel (1) für Fahrzeuge nach einem der Ansprüche von 1 bis 10, **dadurch gekennzeichnet, dass** die aus reibungserhöhenden Material bestehende Schicht (7) auf das Gehäuse (9, 10) geklebt ist.

12. Elektronischer Schlüssel (1) für Fahrzeuge nach einem der vorhergehenden Ansprüche, **dadurch gekennzeichnet, dass** das Gehäuse (9, 10) zwei- oder mehrteilig ist.

13. Elektronischer Schlüssel (1) für Fahrzeuge nach einem der vorhergehenden Ansprüche, **dadurch gekennzeichnet, dass** das Gehäuse (9, 10) Bereiche aufweist, die Tastaturbedienelemente (2, 3, 4) aufnehmen.

14. Elektronischer Schlüssel (1) für Fahrzeuge nach einem der vorhergehenden Ansprüche, **dadurch gekennzeichnet, dass** der Schlüssel einen mechanischen Notschlüssel aufnimmt oder der elektronische Schlüssel als Klappschlüssel ausgebildet ist.

15. Verfahren zur Herstellung eines elektronischen Schlüssels (1) für Fahrzeuge nach Anspruch 12, wobei das reibungserhöhende Material (7) als flächiges Element in eine Spritzgießform zur Herstellung des Gehäuses (9, 10) oder eines Gehäuseteiles an eine Wandung der Form eingelegt wird, die Spritzgießform geschlossen und anschließend das Kunststoffmaterial zur Herstellung des Gehäuse (9, 10) oder des Gehäuseteiles in die Form unter Druck eingespritzt wird, so dass das Kunststoffmaterial des Gehäuses sich mit dem reibungserhöhenden Material (7) verbindet und nach Entnahme aus der Form und Abkühlen des Gehäuses (9, 10) oder des Gehäuseteiles dieses mit den übrigen Bauteilen zu einem elektronischen Schlüssel (1) montiert wird.

## Claims

1. An electronic key (1) for vehicles, consisting of a housing (9, 10), which accommodates an energy store, at least one transmission and/or reception device, and an electronic store for an identification code, **characterised in that**, the housing (9, 10) is fully or partially layered on the outer surface with at least one friction-enhancing material (7).

2. The electronic key (1) for vehicles in accordance with Claim 1, **characterised in that**, the material (7) is leather or artificial leather.

3. The electronic key (1) for vehicles in accordance with Claim 1, **characterised in that**, the material (7) is a soft-touch coating.

4. The electronic key (1) for vehicles in accordance with Claim 1, **characterised in that**, the material (7) is a textile material.

5. The electronic key (1) for vehicles in accordance with Claim 1, **characterised in that**, the material (7) is a foam material.

6. The electronic key (1) for vehicles in accordance with Claim 1, **characterised in that**, the material (7) is a rubber material.

7. The electronic key (1) for vehicles in accordance with Claim 1, **characterised in that**, the material (7) is a silicon material.

8. The electronic key (1) for vehicles in accordance with one of the preceding claims, **characterised in that**, the housing (9, 10) consists of plastic.

9. The electronic key (1) for vehicles in accordance with Claim 8, **characterised in that**, the plastic housing (9, 10) and the layer (7) consisting of a friction-enhancing material are integrally designed.

10. The electronic key (1) for vehicles in accordance with one of the claims from 1 to 7, **characterised in that**, the housing (9, 10) consists of metal.

11. The electronic key (1) for vehicles in accordance with one of the claims from 1 to 10, **characterised in that**, the layer (7) consisting of friction-enhancing material is adhesively bonded onto the housing (9, 10).

12. The electronic key (1) for vehicles in accordance with one of the preceding claims, **characterised in that**, the housing (9, 10) has two or more parts.

13. The electronic key (1) for vehicles in accordance with one of the preceding claims, **characterised in that**, the housing (9, 10) has regions that accommodate the keypad operating elements (2, 3, 4).

14. The electronic key (1) for vehicles in accordance with one of the preceding claims, **characterised in that**, the key accommodates a mechanical emergency key, or the electronic key is designed as a flip key.

15. A method for the manufacture of an electronic key (1) for vehicles in accordance with Claim 12, wherein the friction-enhancing material (7) is inserted as a planar element into an injection casting mould for purposes of manufacturing the housing (9, 10) or a part of the housing on a wall of the mould, the injection casting mould is closed and the plastic material is injected into the mould under pressure, for purposes of manufacturing the housing (9, 10) or the part of the housing, so that the plastic material of the housing bonds with the friction-enhancing material (7), and after removal from the mould and cooling of the housing (9, 10) or the part of the housing the latter is assembled with the other components to form an electronic key (1).

## Revendications

1. Clé électronique (1) pour véhicules automobiles, se composant d'un boîtier (9, 10), lequel héberge un accumulateur d'énergie, au moins un dispositif d'émission et/ou de réception et une mémoire électronique pour un code d'identification, **caractérisée en ce que** le boîtier (9, 10) est enrobé totalement ou partiellement sur la surface extérieure par au moins un matériau augmentant le frottement (7).

2. Clé électronique (1) pour véhicules automobiles selon la revendication 1, **caractérisée en ce que** le matériau (7) est du cuir ou du cuir artificiel.

3. Clé électronique (1) pour véhicules automobiles selon la revendication 1, **caractérisée en ce que** le matériau (7) est un vernis Soft.

4. Clé électronique (1) pour véhicules automobiles selon la revendication 1, **caractérisée en ce que** le matériau (7) est une matière textile.

5. Clé électronique (1) pour véhicules automobiles selon la revendication 1, **caractérisée en ce que** le matériau (7) est un matériau alvéolaire.

6. Clé électronique (1) pour véhicules automobiles selon la revendication 1, **caractérisée en ce que** le matériau (7) est un matériau en caoutchouc.

7. Clé électronique (1) pour véhicules automobiles selon la revendication 1, **caractérisée en ce que** le matériau (7) est un matériau en silicone.

8. Clé électronique (1) pour véhicules automobiles selon l'une des revendications précédentes, **caractérisée en ce que** le boîtier (9, 10) se compose d'une matière plastique.

9. Clé électronique (1) pour véhicules automobiles selon la revendication 8, **caractérisée en ce que** le boîtier en matière plastique (9, 10) et la couche (7) se composant d'un matériau augmentant le frottement sont réalisés d'une seule pièce.

10. Clé électronique (1) pour véhicules automobiles selon l'une des revendications 1 à 7, **caractérisée en ce que** le boîtier (9, 10) se compose de métal.

11. Clé électronique (1) pour véhicules automobiles selon l'une des revendications 1 à 10, **caractérisée en ce que** la couche se composant d'un matériau augmentant le frottement (7) est collée sur le boîtier (9, 10).

12. Clé électronique (1) pour véhicules automobiles selon l'une des revendications précédentes, **caractérisée en ce que** le boîtier (9, 10) est en deux ou plusieurs pièces.

13. Clé électronique (1) pour véhicules automobiles selon l'une des revendications précédentes, **caractérisée en ce que** le boîtier (9, 10) présente des zones, lesquelles hébergent des éléments de commande de clavier (2, 3, 4).

14. Clé électronique (1) pour véhicules automobiles selon l'une des revendications précédentes, **caractérisée en ce que** la clé accueille une clé de secours mécanique ou bien **en ce que** la clé électronique est réalisée en tant que clé escamotable.

15. Procédé pour la fabrication d'une clé électronique (1) pour véhicules automobiles selon la revendication 12, le matériau augmentant le frottement (7) étant mis en place en tant qu'élément en nappe dans un moule de moulage par injection pour la fabrication du boîtier (9, 10) ou d'une partie de boîtier contre une paroi du moule, le moule de moulage par injection étant fermé et le matériau en matière plastique étant ensuite injecté sous pression dans le moule pour la fabrication du boîtier (9, 10) ou de la partie de boîtier, de sorte que le matériau en matière plastique du boîtier se lie au matériau augmentant le frottement (7) et qu'après le prélèvement du moule et le refroidissement du boîtier (9, 10) ou de la partie du boîtier, celui-ci ou celle-ci est assemblé(e) avec les autres composants pour donner une clé électronique (1).
